# EUROPEAN PATENT SPECIFICATION

(11) **EP 3 943 184 B1**
(45) Date of publication and mention of the grant of the patent: **29.05.2024**
(21) Application number: 20774275.0
(22) Date of filing: 04.03.2020
(51) Int. Cl.: B01F 23/23, B01F 23/231, B01F 23/2373, B01F 23/2375, C02F 1/32, C02F 1/74

(54) **AIR BUBBLE GENERATION DEVICE**
LUFTBLASENERZEUGUNGSVORRICHTUNG
DISPOSITIF DE GÉNÉRATION DE BULLES D'AIR

(30) Priority: 19.03.2019 JP 2019050880
(43) Date of publication of application: 26.01.2022
(73) Proprietor: Murata Manufacturing Co., Ltd., Nagaokakyo-shi, Kyoto 617-8555 (JP)
(72) Inventor: FUJIMOTO, Katsumi, Nagaokakyo-shi, Kyoto 617-8555 (JP); KOGI, Yoshihiro, Nagaokakyo-shi, Kyoto 617-8555 (JP)
(74) Representative: Reeve, Nicholas Edward
(86) International application number: PCT/JP2020/009069
(87) International publication number: WO 2020/189270

(56) References cited:
- WO-A1-2018/207395
- JP-A- 2003 093 858
- JP-A- 2006 087 984
- JP-A- 2007 253 000
- JP-A- 2016 209 825
- JP-A- 2017 176 979
- JP-B2- S6 039 139

## Description

### Technical Field

The present disclosure relates to a bubble generator.

### Background Art

In recent years, micro bubbles have been used in various fields, for example, in water purification, wastewater treatment, or fish raising. A bubble generator to generate micro bubbles has been developed (Japanese Patent No. 6108526).

The bubble generator described in Japanese Patent No. 6108526 utilizes a piezoelectric device to generate micro bubbles. This bubble generator includes a diaphragm that flexurally vibrates. Bubbles are generated at micro apertures formed through the diaphragm, and the bubbles are torn into micro pieces by vertical vibrations of a central portion of the flexurally vibrating diaphragm. Accordingly, the diaphragm having micro apertures are continuously exposed to a liquid, such as water. In addition, it is necessary to form a space under the diaphragm for introducing the gas for bubble generation.

In the bubble generator described in Japanese Patent No. 6108526, the diaphragm that separates the liquid and air from each other is supported by concentrically disposed rubber elastic bodies made of, for example, silicone rubber. In the case in which the diaphragm is supported by the rubber elastic bodies, when the diaphragm is vibrated to generate micro bubbles, the rubber elastic bodies partially absorb the vibration of the diaphragm, which may lead to a problem that the bubble generation efficiency of the bubble generator is deteriorated.

On the other hand, in the case in which the diaphragm is supported by a rigid and inelastic partition while the partition separates the liquid and the air from each other, when the diaphragm is vibrated to generate bubbles, vibrations of the diaphragm are transmitted through the partition to the water tank.

JP2006087984 aims to provide an apparatus for jetting air bubbles, from which minute air bubbles can be reliably generated in various environments. The apparatus for jetting air bubbles is provided with an injection part, a piezoelectric/electrostrictive element, a pressure regulating means, a pressure sensor for detecting the pressure of a liquid and an electric controller. The injection part comprises a plate-shaped body having a gas jetting through-hole, one end of which is used as a gas jetting spout, and a wall connected to the plate-shaped body so that a gas supplying space where a gas is supplied is formed by the plate-shaped body and the wall. The gas the pressure of which is regulated by the pressure regulating means according to the detected pressure is supplied to the gas supplying space. The electric controller sends a driving signal to the piezoelectric/electrostrictive element to deform the piezoelectric/electrostrictive element and vibrate the plate-shaped body. As a result, minute air bubbles are jetted from the gas jetting through-hole.

Accordingly, we have appreciated that it would be desirable to provide a bubble generator that does not deteriorate the generation efficiency of micro bubbles while the diaphragm separates a liquid and air from each other.

### SUMMARY OF INVENTION

A bubble generator according to the invention is defined by claim 1 and generates micro bubbles in a liquid by vibration. The bubble generator includes a liquid tank; a diaphragm through which multiple cavities are formed, and that has one surface positioned to be in contact with the liquid in the liquid tank and the other surface positioned to be in contact with a gas. The bubble generator also includes a tubular member that has a first end portion and a second end portion positioned opposite to the first end portion and is connected to the diaphragm at the first end portion so as to support the diaphragm. The bubble generator further includes a piezoelectric device that is fixed to a ring-shaped collar extending radially outward from the tubular member at a position at the second end portion, and the piezoelectric device is adapted to vibrate the tubular member. The first end portion of the tubular member is joined to the liquid tank.

The bubble generator has the structure in which the diaphragm is connected to the first end portion of the tubular member and the piezoelectric device is disposed on the ring-shaped collar at the second end portion. With this configuration, the bubble generator can improve the generation efficiency of micro bubbles while the diaphragm separates the liquid and air from each other.

### BRIEF DESCRIPTION OF DRAWINGS

Fig. 1 is a schematic view illustrating a water purifier in which a bubble generator according to the present embodiment is used.
Fig. 2 is a perspective view illustrating the bubble generator according to the present embodiment.
Fig. 3 is a cross-sectional view illustrating a half section of the bubble generator according to the present embodiment.
Fig. 4 is a view for explanation of vibration of a diaphragm included in the bubble generator according to the present embodiment.
Fig. 5 is a view illustrating resonance characteristics when a ring-shaped piezoelectric device of the bubble generator according to the present embodiment is actuated.
Fig. 6 is a plan view illustrating the diaphragm according to the present embodiment.
Fig. 7 is a cross-sectional view illustrating a cavity formed through the diaphragm according to the present embodiment.

### DESCRIPTION OF EMBODIMENT

### Embodiment

A bubble generator according to the present embodiment will be described in detail with reference to the drawings. Note that the same or equivalent elements will be denoted by the same reference signs and the description will not be repeated.

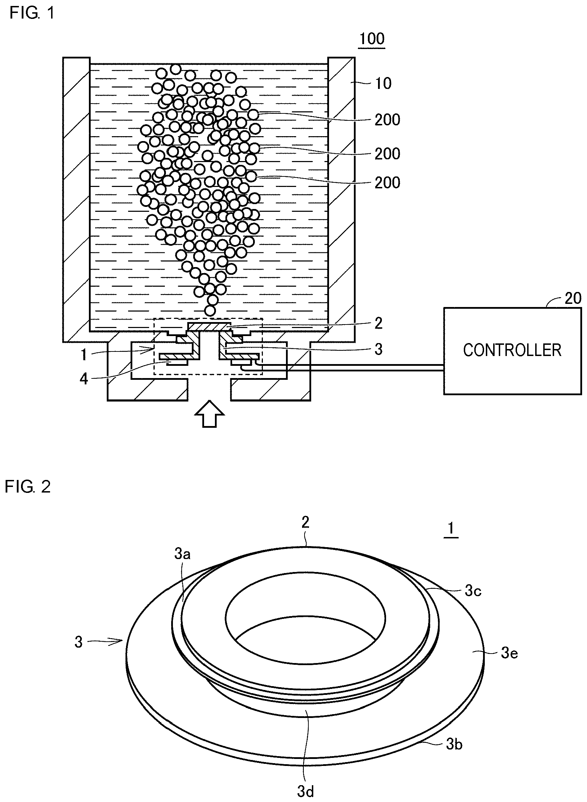

Fig. 1 is a schematic view illustrating a water purifier 100 in which a bubble generator 1 according to the present embodiment is used. For example, the bubble generator 1 of Fig. 1 is used in the water purifier 100 for generating micro bubbles 200 in the water in a water tank (liquid tank) 10. The bubble generator 1 is installed at the bottom of the water tank 10. The application of the bubble generator 1 is not limited to the water purifier 100. The bubble generator 1 may be applied to various apparatuses, such as wastewater treatment apparatuses or fish-raising water tanks.

The bubble generator 1 includes a diaphragm 2, a tubular member 3, and a piezoelectric device 4. The bubble generator 1 is configured such that the diaphragm 2 is disposed at a hole formed in a portion of the bottom of the water tank 10 and the piezoelectric device 4 vibrates the diaphragm 2 via the tubular member 3. Micro bubbles 200 are thereby generated at multiple micro apertures (cavities) formed through the diaphragm 2.

The diaphragm 2 is formed of a glass plate. In the case of the diaphragm 2 being formed of the glass plate, the glass plate may be configured to transmit ultraviolet and deep ultraviolet light having a wavelength of, for example, 200 nm to 380 nm. The diaphragm 2 is formed of the glass plate that can transmit ultraviolet and deep ultraviolet light, and a light source may be disposed so as to emit the ultraviolet light to the water in the water tank 10 from the other side region of the diaphragm 2 so that the water can be sterilized due to both ozone generation and ultraviolet irradiation. For example, the glass plate is made of silica glass or of synthetic silica glass of which the composition is controlled so as to improve transmission of deep ultraviolet rays. The diaphragm 2 may be formed of a metal plate or of a material other than glass (for example, a metal, a resin, or others).

The diaphragm 2 has multiple micro apertures formed therethrough. One surface of the diaphragm 2 is in contact with the water (a liquid) in the water tank 10, whereas the other surface is in contact with air (a gas). In other words, in the bubble generator 1, the water and the air are partitioned from each other with the diaphragm 2. When back pressure is applied to the other surface of the diaphragm 2 (in a direction indicated by the arrow in Fig. 1) and the diaphragm 2 is vibrated, micro bubbles 200 are generated in the water in the water tank 10 by the air supplied through the micro apertures.

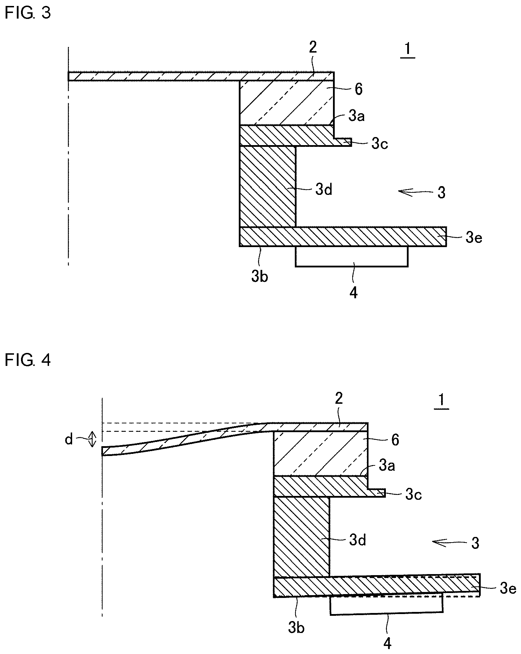

In the bubble generator 1, the piezoelectric device 4 causes the diaphragm 2 to vibrate using the tubular member 3 interposed therebetween. Fig. 2 is a perspective view illustrating the bubble generator 1 according to the present embodiment. Fig. 3 is a cross-sectional view illustrating a half section of the bubble generator according to the present embodiment. Note that in Fig. 3, the dash-dot line passes through the central axis of the tubular member 3.

The tubular member 3 is connected to the diaphragm 2. Note that in Fig. 2, the through hole of the tubular member 3 can be seen through the diaphragm 2 that is formed of the glass plate. In the case of the diaphragm 2 being made of an opaque material, such as a metal, however, the through hole of the tubular member 3 cannot be seen through the diaphragm 2 in Fig. 2. The tubular member 3 is shaped like a tube. The tubular member 3 has a first end portion 3a and a second end portion 3b that is opposite to the first end portion 3a. The second end portion 3b is positioned opposite to the first end portion 3a in the axial direction of the tubular member.

The first end portion 3a is connected to the diaphragm 2. In other words, the first end portion 3a of the tubular member 3 is fixed to the surface of the diaphragm 2 on the side closer to the tubular member 3 in such a manner that the diaphragm 2 closes the opening at the first end portion 3a of the tubular member 3.

In the present embodiment, the tubular member 3 is made of stainless steel. The tubular member 3 may be made of other material. It is preferable that the tubular member 3 be made of a metal having rigidity, such as stainless steel.

The tubular member 3 has a flange 3c disposed so as to extend radially outward from the side surface of the tubular member 3. For example, as illustrated in Fig. 1, the flange 3c is connected to the hole of the water tank 10 formed at a portion of the bottom thereof. The first end portion 3a of the tubular member 3 is thereby joined to the water tank 10. When the piezoelectric device 4 causes the diaphragm 2 to vibrate using the tubular member 3 interposed therebetween, the flange 3c does not vibrate much. Accordingly, the piezoelectric device 4 can vibrate only the diaphragm 2 without transmitting vibrations from the piezoelectric device 4 to the water tank 10.

A ring-shaped collar 3e is disposed at the second end portion 3b of the tubular member 3 so as to extend radially outward. The ring-shaped collar 3e is shaped like a doughnut as viewed in plan. A portion between the flange 3c and the ring-shaped collar 3e is a tubular body 3d. The outside diameter of the ring-shaped collar 3e is set to be larger than the outside diameter of the tubular body 3d. As illustrated in Fig. 3, the outside diameter of the tubular body 3d is smaller than the outside diameter of the diaphragm 2 in the present embodiment, although this does not specifically limit the scope of the invention.

The ring-shaped collar 3e and the tubular body 3d may be formed of the same material as a single component. In the present embodiment, however, the ring-shaped collar 3e and the tubular body 3d are separate members, and the ring-shaped collar 3e is joined to the end surface of the tubular body 3d that is positioned opposite to the diaphragm 2. Accordingly, the ring-shaped collar 3e may be made as a different member from the tubular body 3d.

A ring-shaped piezoelectric device 4 is fixed to the surface of the ring-shaped collar 3e that is opposite to the surface closer to the diaphragm 2. The ring-shaped piezoelectric device 4 has a ring-shaped piezoelectric member and electrodes disposed on respective opposite surfaces of the ring-shaped piezoelectric member. The ring-shaped piezoelectric member is polarized in the thickness direction, in other words, in the direction in which the first end portion 3a and the second end portion 3b of the tubular member 3 oppose each other. The ring-shaped piezoelectric member is made of a piezoelectric substance, such as piezoelectric ceramics.

The ring-shaped collar 3e and the ring-shaped piezoelectric device 4 fixed thereto form a vibrator that causes the diaphragm 2 to vibrate flexurally. For example, the ring-shaped piezoelectric device 4 has an inside diameter of 12 mm, an outside diameter of 18 mm, and a thickness of 1 mm. The piezoelectric device 4 is driven by rectangular waves with a voltage of 50 Vpp to 70 Vpp and a duty ratio of 50%.

In the bubble generator 1, the flexural vibration of the piezoelectric device 4 is transmitted to the diaphragm 2 through the tubular member 3, and the vibration of the diaphragm 2 generates the micro bubbles 200. A controller 20 supplies a signal to the electrodes of the piezoelectric device 4, and the signal drives the piezoelectric device 4.

Note that the piezoelectric device 4 is not limited to the above-described structure having the ring-shaped piezoelectric member and the electrodes disposed on respective opposite surfaces thereof. The piezoelectric device 4 may be formed, for example, by disposing multiple piezoelectric members so as to form a ring-like shape and by disposing the electrodes on both surfaces of each piezoelectric member.

As illustrated in Fig. 3, the diaphragm 2 is connected to the first end portion 3a of the tubular member 3 with a support glass member 6 interposed therebetween. For example, when the thickness of the diaphragm 2 is 0.2 mm, the thickness of the support glass member 6 may be 1.1 mm. The diaphragm 2 may be directly connected to the first end portion 3a of the tubular member 3 without having the support glass member 6 therebetween.

The bubble generator 1 is configured such that the diaphragm 2 being in contact with the liquid is formed of the glass plate and the piezoelectric device 4 vibrates the diaphragm 2 via the tubular member 3. This enables a space for introducing the gas to be completely isolated from the liquid. Complete isolation between the liquid and the space for introducing the gas can prevent electric wiring or the like of the piezoelectric device 4 from coming into contact with the liquid. In addition, in the bubble generator 1, a light source can be disposed in the space for introducing the gas, which also prevents electric wiring or the like of the light source from coming into contact with the liquid.

Next, vibration of the diaphragm 2 in the bubble generator 1 will be described in detail. Fig. 4 is a view for explaining vibration of the diaphragm 2 in the bubble generator 1 according to the present embodiment. Fig. 4 illustrates a half section of the bubble generator 1 and simulated displacement of the diaphragm 2 when the diaphragm 2 vibrates. Note that in Fig. 4, the dash-dot line passes through the central axis of the tubular member 3.

In the bubble generator 1 of Fig. 4, the tubular member 3, the ring-shaped collar 3e, and the ring-shaped piezoelectric device 4 are connected to the diaphragm 2. Applying an alternating electric field between the electrodes of the ring-shaped piezoelectric device 4 flexurally vibrates the layered body of the ring-shaped piezoelectric device 4 and the ring-shaped collar 3e. The displacement of the flexural vibration is transmitted to the diaphragm 2 through the tubular body 3d of the tubular member 3. This flexurally vibrates the diaphragm 2 with a central portion thereof being displaced largely. As illustrated in Fig. 4, in the bubble generator 1, the central portion of the diaphragm 2 is displaced by a displacement d due to the flexural vibration.

When the ring-shaped piezoelectric device 4 vibrates the ring-shaped collar 3e and thereby vibrates the diaphragm 2 flexurally as illustrated in Fig. 4, the bubble generator 1 can vibrate in a first mode in which the central portion of the diaphragm 2 is displaced in opposite phase relative to the displacement of the peripheral portion of the ring-shaped collar 3e and also can vibrate in a second mode in which both portions are displaced in phase.

When the diaphragm 2 is vibrated in the first mode, a node appears in the vicinity of the flange 3c in the bubble generator 1, and vibration does not substantially occur in the vicinity of the flange 3c.

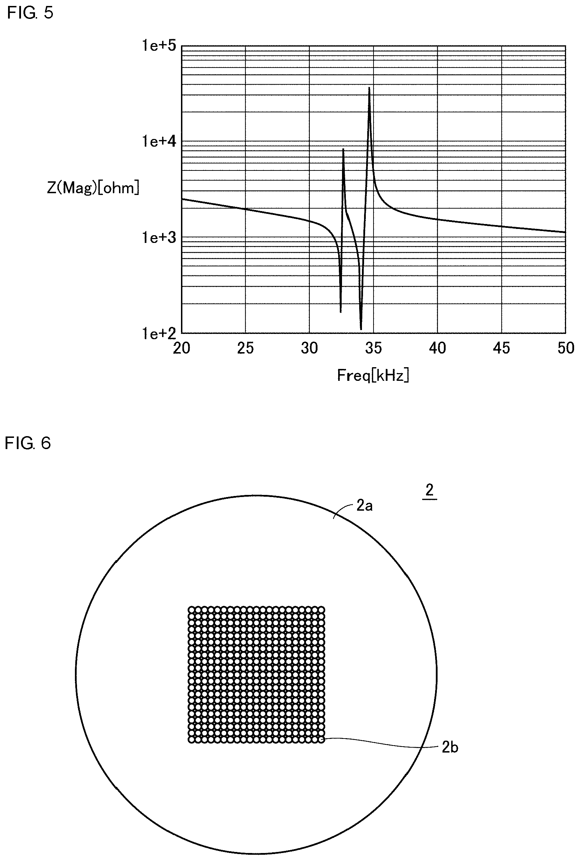

Fig. 5 is a view illustrating resonance characteristics when the ring-shaped piezoelectric device 4 of the bubble generator according to the present embodiment is actuated. As illustrated in Fig. 5, the response in the first mode appears on a low-frequency side, whereas the response in the second mode appears on a high-frequency side.
Here, the resonant frequency of the first mode appears in the vicinity of 32.5 kHz, and the resonant frequency of the second mode appears in the vicinity of 34.0 kHz.

Note that changing the outside diameter and the thickness of the ring-shaped collar 3e can largely shift the response frequencies in the first mode and in the second mode of the flexural vibration.

Multiple micro apertures are formed through the diaphragm 2. Fig. 6 is a plan view illustrating the diaphragm according to the present embodiment. The diaphragm 2 of Fig. 6 is formed of a glass plate 2a of 14 mm in diameter in which multiple micro apertures 2b are formed in a 5 mm by 5 mm region at a central portion thereof. For example, when the diameter of each micro aperture 2b is set to be 10 µm and the spacing between adjacent micro apertures 2b is set to be 0.25 mm, four hundred and forty one micro apertures 2b can be formed in the 5 mm by 5 mm region of the diaphragm 2. Note that in Fig. 6, the diameter and the spacing of the micro apertures 2b are illustrated differently from actual apertures to give a picture of many micro apertures 2b being formed in the glass plate 2a.

The diameter of each micro aperture 2b formed in the diaphragm 2 is 1 µm to 20 µm when measured at the opening of the aperture that comes into contact with the liquid. Introducing air through the micro apertures 2b generates micro bubbles 200 in the water in the water tank 10. An approximate diameter of each micro bubble 200 is 10 times larger than the aperture diameter. The micro apertures 2b are arrayed at a spacing of 10 times or more larger than the aperture diameter, which prevents micro bubbles 200 generated at one micro aperture 2b from merging other micro bubbles 200 generated at adjacent micro apertures 2b. This improves performance of generating discrete micro bubbles 200.

For example, the micro apertures 2b can be formed through the glass plate 2a using a method in which laser irradiation and liquid-phase etching are combined. More specifically, the glass plate 2a is irradiated with laser beams, and the laser energy denatures the composition of the glass plate 2a. The denatured portion is etched with a liquid fluoride-based etching material to form the micro aperture 2b.

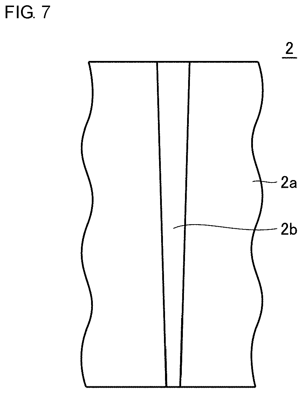

Fig. 7 is a cross-sectional view illustrating a micro aperture (cavity) 2b formed through the diaphragm according to the present embodiment. As illustrated in Fig. 7, the micro aperture 2b formed through the glass plate 2a has a tapered shape in which the aperture diameter at the upper surface in the figure is larger than that at the lower surface. The diaphragm 2 is disposed such that the surface with the smaller diameter apertures is in contact with the water in the water tank 10 and the surface with the larger diameter apertures is in contact with the gas, which can further reduce the diameter of each micro bubble 200 generated at the micro aperture 2b. The diaphragm 2 may be disposed oppositely, in other words, the surface with the larger diameter apertures may be in contact with the water in the water tank 10 and the surface with the smaller diameter apertures may be in contact with the gas.

Forming the diaphragm 2 using the glass plate 2a is advantageous compared with a diaphragm formed of a metal plate in that the glass plate 2a can prevent liquid contamination from occurring due to metal ions being leached into the liquid. Moreover, in the case of micro apertures being formed in the metal plate, it is necessary to perform plating to prevent corrosion. It is also necessary to perform plating using a precious metal to prevent leaching of metal ions into the liquid. Precious metal plating on the metal plate having micro apertures increases the cost of the diaphragm.

As described above, the bubble generator 1 according to the present embodiment generates micro bubbles 200 in the liquid by vibration. The bubble generator 1 includes the diaphragm 2, the tubular member 3, and the piezoelectric device 4. The diaphragm 2 has a plurality of the micro apertures 2b formed therethrough, and the diaphragm 2 has one surface to be in contact with the water (liquid) in the water tank 10 and the other surface to be in contact with the gas. The tubular member 3 has the first end portion 3a and the second end portion 3b positioned opposite to the first end portion 3a, and the tubular member 3 is connected to the diaphragm 2 at the first end portion 3a so as to support the diaphragm 2. The piezoelectric device 4 is fixed to the ring-shaped collar 3e that extends radially outward from the tubular member 3 at a position near the second end portion 3b of the tubular member 3, and the piezoelectric device 4 vibrates the tubular member 3. The first end portion 3a of the tubular member 3 is joined to the water tank 10.

Accordingly, the bubble generator 1 has the structure in which the diaphragm 2 is connected to the first end portion 3a of the tubular member 3 and the piezoelectric device 4 is disposed on the ring-shaped collar 3e at the second end portion 3b. This enables the bubble generator 1 to improve the generation efficiency of micro bubbles while the diaphragm 2 separates the liquid and the air from each other. Moreover, the bubble generator 1 enables complete separation between the liquid and the space for introducing the gas, which can prevent electric wiring or the like of the piezoelectric device 4 from coming into contact with the liquid.

In addition, the ring-shaped collar 3e has the first surface positioned closer to the diaphragm 2 and the second surface positioned opposite to the first surface, and the piezoelectric device 4 is fixed to the second surface. Accordingly, the bubble generator 1 can prevent the piezoelectric device 4 from coming into contact with the liquid.

In addition, the tubular member 3 may have the flange 3c formed at the first end portion, and the tubular member 3 may be joined to the water tank 10 with the flange 3c interposed therebetween. Accordingly, the bubble generator 1 can vibrate only the diaphragm 2 without transmitting vibrations from the piezoelectric device 4 to the water tank 10.

Moreover, the flange 3c, the tubular member 3, and the ring-shaped collar 3e may be integrally formed of the same material. This can increase the strength of the flange 3c, the tubular member 3, and the ring-shaped collar 3e.

The diaphragm 2 may be formed of the glass plate. Accordingly, the bubble generator 1 can prevent liquid contamination due to metal ions being leached into the water (liquid) in the water tank 10.

Moreover, the glass plate may be connected to the tubular member 3 at the first end portion 3a with the support glass member 6 interposed therebetween.

Each one of the micro apertures 2b of the diaphragm 2 may have a diameter of 1 µm to 20 µm measured at the surface to be in contact with the liquid, and the micro apertures 2b may be formed with a spacing between adjacent micro apertures 2b being 10 times larger than the diameter. With this configuration, the bubble generator 1 can prevent micro bubbles 200 generated at one micro aperture 2b from merging other micro bubbles 200 generated at adjacent micro apertures 2b, which enables discrete micro bubbles 200 to be generated.

Moreover, each one of the micro aperture 2b has the tapered shape in which the diameter of the aperture 2b at the one surface to be in contact with the water (liquid) in the water tank 10 is smaller than the diameter of the aperture 2b at the other surface to be in contact with the gas. This enables the bubble generator 1 to further reduce the diameter of each micro bubble 200 generated at the micro aperture 2b.

The embodiment disclosed herein is construed, in all respects, not as limiting but as an example. It is intended that the scope of the present invention be set forth not in the above descriptions but in the claims.

### Reference Signs List

1, 1a bubble generator
2 diaphragm
2a glass plate
2b micro aperture
3 tubular member
3a first end portion
3b second end portion
3c flange
3d tubular body
3e ring-shaped collar
4, 4A piezoelectric device
6 support glass member
10 water tank
20 controller
100 water purifier
200 bubble

## Claims

1. A bubble generator (1) for generating micro bubbles (200) in a liquid by vibration, the bubble generator comprising:
a liquid tank (10);
a diaphragm (2) through which multiple cavities are formed and that has one surface positioned to be in contact with the liquid in the liquid tank (10) and the other surface positioned to be in contact with a gas;
a tubular member (3) that has a first end portion (3a) and a second end portion (3b) positioned opposite to the first end portion and that is connected to the diaphragm (2) at the first end portion (3a) so as to support the diaphragm (2); and
a piezoelectric device (4) that is fixed to a ring-shaped collar (3e) extending radially outward from the tubular member (3) at a position at the second end portion (3b) of the tubular member (3) and that is adapted to vibrate the tubular member (3), wherein
the first end portion (3a) of the tubular member is joined to the liquid tank (10).

2. The bubble generator according to claim 1, wherein
the ring-shaped collar (3e) has a first surface positioned closer to the diaphragm (2) and a second surface positioned opposite to the first surface, and
the piezoelectric device (4) is fixed to the second surface.

3. The bubble generator according to claim 1 or 2, wherein
the tubular member (3) has a flange (3c) formed at the first end portion (3a), and
the tubular member (3) is joined to the liquid tank (10) with the flange (3c) interposed therebetween.

4. The bubble generator according to claim 3, wherein
the flange (3c), the tubular member (3), and the ring-shaped collar (3e) are integrally formed of the same material.

5. The bubble generator according to any one of claims 1 to 4, wherein,
the diaphragm (2) is formed of a glass plate (2a).

6. The bubble generator according to claim 5, wherein
the glass plate (2a) is connected to the tubular member (3) at the first end portion(3a) with a support glass member (6) interposed therebetween.

7. The bubble generator according to any one of claims 1 to 6, wherein
each one of the cavities of the diaphragm (2) has a diameter of 1 µm to 20 µm, and
the cavities are formed with a spacing between adjacent cavities being 10 times greater than the diameter.

8. The bubble generator according to any one of claims 1 to 7, wherein
each one of the cavities has a tapered shape in which a diameter of the cavity at the one surface to be in contact with the liquid in the liquid tank is smaller than a diameter of the cavity at the other surface to be in contact with the gas.

## Patentansprüche

1. Blasengenerator (1) zur Erzeugung von Mikroblasen (200) in einer Flüssigkeit durch Vibration, der Blasengenerator umfassend:
einen Flüssigkeitsbehälter (10);
eine Membran (2), durch die eine Vielzahl von Hohlräumen gebildet ist und die mit einer Oberfläche positioniert ist, um mit der Flüssigkeit in dem Flüssigkeitsbehälter (10) in Kontakt zu sein, und mit der anderen Oberfläche positioniert ist, um mit einem Gas in Kontakt zu sein;
ein rohrförmiges Element (3), das einen ersten Endteil (3a) und einen zweiten Endteil (3b), der dem ersten Endteil entgegengesetzt positioniert ist, aufweist und das an dem ersten Endteil (3a) mit der Membran (2) verbunden ist, um die Membran (2) zu stützen; und
eine piezoelektrische Vorrichtung (4), die an einem ringförmigen Kragen (3e) befestigt ist, der sich von dem rohrförmigen Element (3) an einer Position an dem zweiten Endteil (3b) des rohrförmigen Elements (3) radial nach außen erstreckt, und die zum Vibrierenlassen des rohrförmigen Elements (3) ausgelegt ist, wobei
der erste Endteil (3a) des rohrförmigen Elements an den Flüssigkeitsbehälter (10) angefügt ist.

2. Blasengenerator nach Anspruch 1, wobei
der ringförmige Kragen (3e) eine erste Oberfläche, die näher an der Membran (2) positioniert ist, und eine zweite Oberfläche, die der ersten Oberfläche entgegengesetzt positioniert ist, aufweist, und
die piezoelektrische Vorrichtung (4) an der zweiten Oberfläche befestigt ist.

3. Blasengenerator nach Anspruch 1 oder 2, wobei
das rohrförmige Element (3) einen Flansch (3c) aufweist, der an dem ersten Endteil (3a) gebildet ist, und
das rohrförmige Element (3) an den Flüssigkeitsbehälter (10) angefügt ist, wobei der Flansch (3c) dazwischen angeordnet ist.

4. Blasengenerator nach Anspruch 3, wobei
der Flansch (3c), das rohrförmige Element (3) und der ringförmige Kragen (3e) einstückig aus demselben Material gebildet sind.

5. Blasengenerator nach einem der Ansprüche 1 bis 4, wobei
die Membran (2) von einer Glasplatte (2a) gebildet wird.

6. Blasengenerator nach Anspruch 5, wobei
die Glasplatte (2a) am ersten Endteil (3a) mit dem rohrförmigen Element (3) verbunden ist, wobei ein Stützglaselement (6) dazwischen angeordnet ist.

7. Blasengenerator nach einem der Ansprüche 1 bis 6, wobei
jeder der Hohlräume der Membran (2) einen Durchmesser von 1 µm bis 20 µm aufweist und
die Hohlräume mit einer Beabstandung zwischen benachbarten Hohlräumen gebildet sind, die 10-mal größer als der Durchmesser ist.

8. Blasengenerator nach einem der Ansprüche 1 bis 7, wobei
jeder der Hohlräume eine abgeschrägte Form hat, bei der ein Durchmesser des Hohlraums an der einen Oberfläche, die mit der Flüssigkeit im Flüssigkeitsbehälter in Kontakt sein soll, kleiner ist als ein Durchmesser des Hohlraums an der anderen Oberfläche, die mit dem Gas in Kontakt sein soll.

## Revendications

1. Générateur de bulles (1) pour générer des microbulles (200) dans un liquide par vibration, le générateur de bulles comprenant :
un réservoir de liquide (10) ;
un diaphragme (2) à travers lequel des cavités multiples sont formées et qui a une surface positionnée pour être en contact avec le liquide dans le réservoir de liquide (10) et l'autre surface positionnée pour être en contact avec un gaz ;
un membre tubulaire (3) qui a une première partie d'extrémité (3a) et une deuxième partie d'extrémité (3b) positionnée à l'opposé de la première partie d'extrémité et qui est connectée au diaphragme (2) à la première partie d'extrémité (3a) de manière à soutenir le diaphragme (2) ; et
un dispositif piézoélectrique (4) qui est fixé à un collier en forme d'anneau (3e) s'étendant radialement vers l'extérieur du membre tubulaire (3) à une position à la deuxième partie d'extrémité (3b) du membre tubulaire (3) et qui est adapté pour faire vibrer le membre tubulaire (3), dans lequel la première partie d'extrémité (3a) du membre tubulaire est jointe au réservoir de liquide (10).

2. Générateur de bulles selon la revendication 1, dans lequel
le collier en forme d'anneau (3e) a une première surface positionnée plus près du diaphragme (2) et une deuxième surface positionnée à l'opposé de la première surface, et
le dispositif piézoélectrique (4) est fixé à la deuxième surface.

3. Générateur de bulles selon la revendication 1 ou 2, dans lequel
le membre tubulaire (3) a une bride (3c) formée à la première partie d'extrémité (3a), et
le membre tubulaire (3) est joint au réservoir de liquide (10) avec la bride (3c) interposée entre eux.

4. Générateur de bulles selon la revendication 3, dans lequel
la bride (3c), le membre tubulaire (3) et le collier en forme d'anneau (3e) sont intégralement formés du même matériau.

5. Générateur de bulles selon l'une quelconque des revendications 1 à 4, dans lequel,
le diaphragme (2) est formé d'une plaque de verre (2a).

6. Générateur de bulles selon la revendication 5, dans lequel
la plaque de verre (2a) est raccordée au membre tubulaire (3) à la première partie d'extrémité (3a) avec un membre en verre de support (6) interposé entre eux.

7. Générateur de bulles selon l'une quelconque des revendications 1 à 6, dans lequel
chacune des cavités du diaphragme (2) a un diamètre de 1 µm à 20 µm, et
les cavités sont formées avec un espacement entre des cavités adjacentes étant de 10 fois plus grand que le diamètre.

8. Générateur de bulles selon l'une quelconque des revendications 1 à 7, dans lequel
chacune des cavités a une forme conique où un diamètre de la cavité à la une surface devant être en contact avec le liquide dans le réservoir de liquide est plus petit qu'un diamètre de la cavité à l'autre surface devant être en contact avec le gaz.
